# DEMANDE DE BREVET EUROPEEN

(11) **EP 1 211 606 A1**
(43) Date de publication de la demande: **05.06.2002**
(21) Numéro de dépôt: 01125960.3
(22) Date de dépôt: 31.10.2001
(51) Int. Cl.: G06F 13/42

(54) **Procédé synchrone de transmission de données**

(30) Priorité: 29.11.2000 FR 0015387
(71) Demandeur: STMicroelectronics, 92120 Montrouge (FR)
(72) Inventeur: Roche, Franck, 13530 Trets (FR); Tarayre, Pierre, 38220 Brie et Angonnes (FR)
(74) Mandataire: Marchand, André

(57) **Abrégé**

L'invention concerne un procédé de transmission de données entre deux dispositifs (D1, D2), au moyen d'un fil d'horloge (CK) et d'au moins un fil de données (DT), le fil d'horloge étant maintenu par défaut à une valeur logique A, chaque dispositif pouvant lier le fil d'horloge à un potentiel électrique représentant une valeur logique B inverse de A. Selon l'invention, les deux dispositifs lient à B le fil d'horloge lors de la transmission d'une donnée, le dispositif à qui la donnée est destinée ne relâche pas le fil d'horloge tant qu'il n'a pas lu la donnée, et le dispositif qui envoie la donnée maintient la donnée sur le fil de données au moins jusqu'à un instant où le fil d'horloge est relâché par le dispositif à qui la donnée est destinée. Application notamment à une communication entre un micro-ordinateur et un microprocesseur.

## Description

La présente invention concerne la transmission de données entre appareils numériques, et notamment la transmission de données entre un microprocesseur et un micro-ordinateur ou entre deux microprocesseurs.

Depuis l'avènement de l'ère des calculateurs numériques, les procédés de transmission de données numériques ont occupé une place essentielle dans la mise oeuvre des systèmes informatiques, et ont fait l'objet de divers développements. De façon générale, les procédés de transmission de données reposent toujours sur une liaison physique appelée également "couche physique", qui assure la transmission physique de signaux électriques entre deux points d'une ligne, selon un protocole déterminé définissant la forme et la durée des signaux électriques. Ce protocole associé à la couche physique est complété par un protocole de communication, ou couche de liaison de données, qui permet d'organiser le transfert de données en évitant les collisions, en attribuant des règles spécifiques d'émission ou de réception de données et de synchronisation entre les dispositifs qui communiquent. Ce protocole de deuxième niveau est lui-même complété par un protocole de troisième niveau constitué par des commandes, transmises par l'intermédiaire de la couche physique, chaque commande étant constituée par une chaîne de bits dont le format, le contenu et le sens obéit à des règles prédéfinies. Dans les réseaux très évolués comme les réseaux informatiques ou les réseaux de téléphonie numérique, on trouve au-dessus de ces premiers niveaux une importante hiérarchie de protocoles qui garantissent en synergie la cohésion des réseaux.

La présente invention concerne un procédé de transmission de données de bas niveau se situant au niveau de la couche liaison de données, et vise des applications industrielles telles que la communication entre un micro-ordinateur et un microprocesseur, par exemple pour procéder à des opérations de test ou de maintenance sur le microprocesseur au moyen du micro-ordinateur, ou encore la communication entre deux microprocesseurs, par exemple deux microprocesseurs agencés sur une même carte à circuit imprimé.

Parmi les procédés de transmission de données les plus communément utilisés dans ce domaine d'application, on trouve des procédés synchrones et des procédés asynchrones. Les procédés synchrones se distinguent des procédés asynchrones par l'existence d'un fil d'horloge véhiculant un signal d'horloge émis par un dispositif maître, l'autre ou les autres dispositifs se synchronisent à ce signal d'horloge pour recevoir ou envoyer des données. Les procédés synchrones présentent l'avantage de permettre la transmission de chaînes de bits de grande longueur en raison de la synchronisation assurée par le signal d'horloge commun. En revanche, ils nécessitent plusieurs fils pour le transport de divers signaux de contrôle (RX, TX, RS, TS...) permettant aux dispositifs de synchroniser leurs actions.

Plus particulièrement, les procédés de communication synchrones présentent trois inconvénients principaux dans le cadre des applications mentionnées ci-dessus. D'une part, ils nécessitent la réservation de plusieurs entrées/sorties du microprocesseur pour permettre la transmission des signaux de contrôle. D'autre part, ils nécessitent la prévision, dans le microprocesseur, de circuits d'interface spécifiques assurant la gestion du protocole de communication, tels les circuits appelés USART (Universal Synchronous Asynchronous Receiver Transmitter), d'un prix de revient et d'un encombrement non négligeables. Enfin, ils nécessitent que les horloges internes respectives des deux dispositifs devant dialoguer ensemble soient compatibles. De plus, l'un des dispositifs peut fonctionner en mode multitâche et n'être pas disponible pour émettre ou recevoir des données au moment où il est sollicité par l'autre dispositif.

Les procédés de transmission de données asynchrones présentent l'avantage de pouvoir être mis en oeuvre au moyen de deux fils seulement, mais nécessitent également un circuit d'interface de communication spécifique, tel un circuit UART (Universal Asynchronous Receiver Transmitter), qui assure la gestion du protocole de communication et comporte des registres tampons pour stocker les chaînes de bits à émettre ou à recevoir. Les communications asynchrones nécessitent également des fréquences d'horloge sensiblement accordées, car un dispositif fonctionnant à une fréquence déterminée n'est pas en mesure de recevoir des données asynchrones émises par un dispositif fonctionnant à une fréquence beaucoup plus élevée.

Ainsi, un objectif de la présente invention est de prévoir un procédé de transmission de données qui soit du type synchrone et qui permette à deux dispositifs ayant le cas échéant des fréquences d'horloge très différentes de dialoguer ensemble.

Un autre objectif de la présente invention est de prévoir un tel procédé synchrone qui puisse être mis en oeuvre au moyen de deux fils seulement, dans le cadre d'une transmission de données série.

Cet objectif est atteint par la prévision d'un procédé de transmission de données entre deux dispositifs, au moyen d'un fil d'horloge et d'au moins un fil de données, le fil d'horloge étant maintenu par défaut à une valeur logique A, dans lequel : chaque dispositif peut lier le fil d'horloge à un potentiel électrique représentant une valeur logique B inverse de A ; lors de la transmission d'une donnée, les deux dispositifs lient à B le fil d'horloge ; le dispositif à qui la donnée est destinée ne relâche pas le fil d'horloge tant qu'il n'a pas lu la donnée ; le dispositif qui envoie la donnée maintient la donnée sur le fil de données au moins jusqu'à un instant où le fil d'horloge est relâché par le dispositif à qui la donnée est destinée.

Selon un mode de réalisation, l'un des dispositifs est maître et l'autre esclave, le maître se distinguant de l'esclave par le fait qu'il est le premier à lier à B le fil d'horloge lorsqu'une donnée est transmise, quel que soit le sens de transmission de la donnée.

Selon un mode de réalisation, lorsque le maître doit envoyer une donnée à l'esclave, le maître applique la donnée sur le fil de données puis lie à B le fil d'horloge.

Selon un mode de réalisation, lorsque l'esclave doit recevoir une donnée du maître, l'esclave détecte la valeur B sur le fil d'horloge, puis lie à B le fil d'horloge et lit la donnée.

Selon un mode de réalisation, le temps dont dispose l'esclave pour relâcher le fil d'horloge après avoir reçu une donnée, est indépendant d'une quelconque action du maître, le maître n'envoyant pas de nouvelle donnée tant que l'esclave n'a pas relâché le fil d'horloge.

Selon un mode de réalisation, lorsque le maître doit recevoir une donnée de l'esclave, le maître lie à B le fil d'horloge.

Selon un mode de réalisation, lorsque l'esclave doit envoyer une donnée au maître, l'esclave détecte la valeur B sur le fil d'horloge, puis lie à B le fil d'horloge et applique la donnée sur le fil de données.

Selon un mode de réalisation, le temps dont dispose l'esclave pour relâcher le fil d'horloge après avoir envoyé une donnée, est indépendant d'une quelconque action du maître, le maître ne liant pas à B le fil d'horloge pour demander l'envoi d'une nouvelle donnée tant que l'esclave n'a pas relâché le fil d'horloge.

Selon un mode de réalisation, quand le fil d'horloge présente la valeur logique A, le temps dont dispose le maître pour lier à B le fil d'horloge est indépendant d'une quelconque action de l'esclave.

Selon un mode de réalisation, le procédé comprend une étape consistant à équiper l'esclave d'un circuit d'interface de communication comprenant : des moyens à déclenchement pour lier automatiquement à B le fil d'horloge lorsque le fil d'horloge passe de A à B, une entrée pour appliquer aux moyens à déclenchement un signal de relâchement du fil d'horloge, et une sortie pour délivrer un signal d'information présentant une première valeur lorsque le fil d'horloge est lié à B par les moyens à déclenchement et une deuxième valeur lorsque le fil d'horloge est relâché par les moyens à déclenchement.

Selon un mode de réalisation, le procédé comprend une étape consistant à prévoir en outre, dans le circuit d'interface de communication : des moyens de stockage d'au moins une donnée, et des moyens pour appliquer automatiquement la donnée sur le fil de données lorsque le fil d'horloge passe de A à B.

Selon un mode de réalisation, A=1 et B=0.

La présente invention concerne également un dispositif d'émission/réception de type maître comprenant une borne de connexion à un fil d'horloge, au moins une borne de connexion à un fil de données, des moyens pour lier le fil d'horloge à un potentiel électrique B représentant une valeur logique inverse d'une valeur logique A, et des moyens pour exécuter les opérations suivantes, lorsqu'une donnée doit être émise : vérifier ou attendre que le fil d'horloge présente la valeur logique A, appliquer la donnée sur le fil de données, lier à B le fil d'horloge, puis relâcher le fil d'horloge, et maintenir la donnée sur le fil de données au moins jusqu'à un instant où le fil d'horloge présente la valeur logique A.

Selon un mode de réalisation, le dispositif comprend en outre des moyens pour exécuter les opérations suivantes, lorsqu'une donnée doit être reçue : vérifier ou attendre que le fil d'horloge présente la valeur logique A, lier à B le fil d'horloge, lire la donnée sur le fil de données, puis relâcher le fil d'horloge.

La présente invention concerne également un dispositif d'émission/réception de données de type esclave destiné à communiquer avec un dispositif de type maître tel que décrit ci-dessus, comprenant une borne de connexion à un fil d'horloge, au moins une borne de connexion à un fil de données, des moyens pour lier le fil d'horloge à un potentiel électrique B représentant une valeur logique inverse d'une valeur logique A, et des moyens pour exécuter les opérations suivantes, lorsqu'une donnée doit être reçue : détecter un passage de A à B sur le fil d'horloge, lier à B le fil d'horloge, lire la donnée sur le fil de données, et relâcher le fil d'horloge.

Selon un mode de réalisation, le dispositif de type esclave comprend en outre des moyens pour exécuter les opérations suivantes, lorsqu'une donnée doit être émise : détecter un passage de A à B sur le fil d'horloge, lier à B le fil d'horloge, appliquer la donnée sur le fil de données, et relâcher le fil d'horloge.

La présente invention concerne également un système de transmission de données synchrone, comprenant un dispositif de type maître tel que décrit ci-dessus relié par un fil d'horloge et au moins un fil de données à un dispositif de type esclave tel que décrit ci-dessus.

La présente invention concerne également un circuit d'interface de communication de type esclave relié ou destiné à être relié par l'intermédiaire d'un fil d'horloge et d'au moins un fil de données à un dispositif de type maître tel que décrit ci-dessus, le circuit d'interface comprenant des moyens pour lier le fil d'horloge à un potentiel électrique B représentant une valeur logique inverse d'une valeur logique A, des moyens à déclenchement pour lier automatiquement à B le fil d'horloge lorsque le fil d'horloge passe de A à B, une entrée pour appliquer aux moyens à déclenchement un signal de relâchement du fil d'horloge, et une sortie pour délivrer un signal d'information présentant une première valeur lorsque le fil d'horloge est lié à B par les moyens à déclenchement et une deuxième valeur lorsque le fil d'horloge est relâché par les moyens à déclenchement.

Selon un mode de réalisation, le circuit d'interface de communication comprend en outre des moyens de stockage d'au moins une donnée, et des moyens pour appliquer automatiquement la donnée sur le fil de données lorsque le fil d'horloge passe de A à B.

Ces objets, caractéristiques et avantages ainsi que d'autres de la présente invention seront exposés plus en détail dans la description suivante du procédé de l'invention, en relation avec les figures jointes parmi lesquelles :
- la figure 1 illustre la mise en oeuvre du procédé de l'invention au moyen deux fils seulement,
- les figures 2A et 2B sont des organigrammes représentant des étapes du procédé selon l'invention exécutées respectivement par un dispositif maître et un dispositif esclave lors de l'envoi d'une donnée par le maître,
- les figures 3A et 3B sont des chronogrammes représentant des signaux présents sur un fil d'horloge et un fil de données lors de l'envoi d'une donnée par le maître, respectivement quand le maître est plus rapide que l'esclave et quand l'esclave est plus rapide que le maître,
- les figures 4A et 4B sont des organigrammes représentant des étapes du procédé selon l'invention exécutées respectivement par un dispositif maître et un dispositif esclave lors de l'envoi d'une donnée par l'esclave,
- les figures 5A et 5B sont des chronogrammes représentant l'aspect de signaux présents sur un fil d'horloge et un fil de données lors de l'envoi d'une donnée par l'esclave, respectivement quand le maître est plus rapide que l'esclave et quand l'esclave est plus rapide que le maître,
- la figure 6 est le schéma d'un circuit d'interface de communication selon l'invention, associé à un dispositif esclave, et
- la figure 7 illustre une application du procédé de l'invention à une communication entre un micro-ordinateur et un microprocesseur.

### Principes généraux du procédé de l'invention

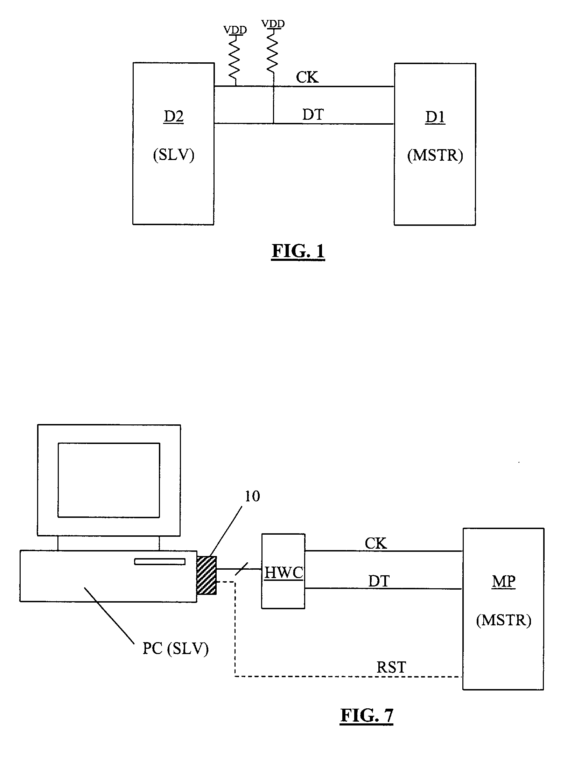

La figure 1 illustre schématiquement un exemple de mise en oeuvre du procédé de l'invention pour l'obtention d'une liaison de données synchrone entre deux dispositifs D1 et D2, faisant intervenir deux fils seulement, un fil étant utilisé en tant que fil d'horloge CK et l'autre en tant que fil de données DT. Le fil d'horloge est maintenu par défaut à une valeur logique déterminée, ici la valeur "1", obtenue par exemple au moyen d'une résistance de rappel au niveau haut (résistance "pull-up") connectée d'une part au fil d'horloge CK et d'autre part à une source de tension VDD représentant le "1" logique. De préférence, mais de façon non obligatoire, le fil de données DT est également maintenu par une résistance de rappel à une valeur logique déterminée, ici la valeur "1".

Selon l'invention, chaque dispositif D1, D2 peut effectuer deux actions sur le fil d'horloge CK :
1) lier le fil d'horloge CK à la valeur logique inverse de la valeur par défaut, soit ici lier à 0 le fil CK,
2) relâcher le fil d'horloge CK, pour que celui-ci retrouve la valeur logique par défaut,

Selon l'invention, ces deux actions de base sont utilisées pour synchroniser une transmission de données entre les dispositifs D1 et D2 en appliquant les règles générales suivantes :
1) les deux dispositifs lient à 0 le fil d'horloge lors de la transmission d'une donnée,
2) le dispositif qui envoie la donnée maintient la donnée sur le fil de données DT au moins jusqu'à l'instant où le fil d'horloge est relâché par le dispositif devant lire la donnée, et
3) le dispositif qui doit lire la donnée ne relâche le fil d'horloge CK qu'après avoir lu la donnée.

On notera ici que l'expression "lier à 0" ("tie low" ou "tie to 0") a été préférée à l'expression "forcer à 0" dans la présente description, bien que les deux expressions soient très proches. En effet, dire qu'un dispositif "force à 0" le fil d'horloge pourrait sous-entendre que le dispositif fait passer le signal d'horloge à 0. Or, dans le procédé de l'invention, un dispositif peut forcer à 0 le fil d'horloge alors que le fil d'horloge est déjà forcé à 0 par l'autre dispositif. Dans ces conditions, le verbe "lier" semble plus approprié.

Les opérations exécutées par chacun des dispositifs pour la transmission d'une donnée vont maintenant être décrites. L'un des dispositifs, par exemple D1, sera appelé dispositif maître (MSTR) et l'autre dispositif D2 sera appelé dispositif esclave (SLV). On notera que les dénominations "maître" et"esclave" ne sont pas utilisées ici au sens conventionnel de ces termes. Ce qui distingue ici le dispositif maître du dispositif esclave, c'est que le maître est toujours le premier à lier à 0 le fil d'horloge CK. Le maître dispose à cet effet d'un temps indépendant des actions de l'esclave. L'esclave dispose lui-même, pour relâcher le fil d'horloge CK après avoir délivré ou lu une donnée sur le fil de données DT, d'un temps indépendant des actions du maître.

On distinguera ainsi le cas où des données sont envoyées par le maître et le cas où des données sont envoyées par l'esclave.

### Transmission de données dans le sens maître-esclave

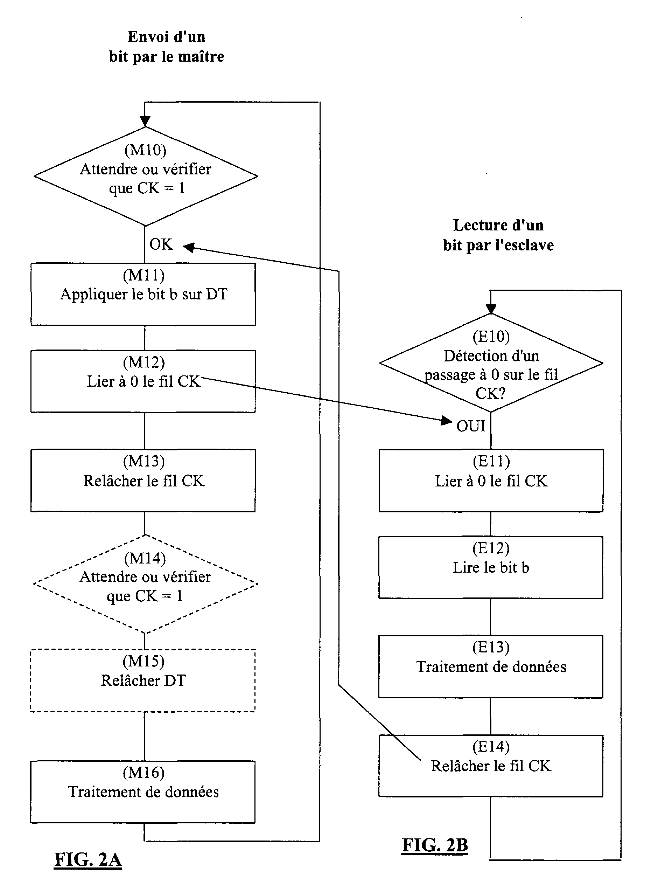

Les actions exécutées par le maître pour l'envoi d'un bit de donnée à l'esclave sont décrites par l'organigramme de la figure 2A, et comprennent les étapes suivantes :

| | |
|---|---|
| **Etape M10** | Attendre ou vérifier que CK = 1 |
| **Etape M11** | Appliquer le bit b sur DT |
| **Etape M12** | Lier à 0 le fil CK |
| **Etape M13** | Relâcher CK |
| **Etape M14** | Attendre ou vérifier que CK = 1 |
| **Etape M15** | Relâcher DT |
| **Etape M16** | Traitement de données |

On voit tout d'abord que le maître n'applique pas le bit b sur le fil DT (étape M11) tant que le fil CK n'est pas à 1 (étape M10). En effet, si le fil CK est encore à 0, cela signifie que l'esclave n'est pas prêt à recevoir la donnée, soit parce qu'il est en train de lire une donnée précédemment envoyée, soit parce qu'il est occupé à d'autres tâches, soit parce que son horloge est très lente, ces diverses possibilités pouvant se cumuler en pratique. Ainsi, il apparaît ici que l'envoi d'une nouvelle donnée est subordonné à "l'autorisation" de l'esclave, et que cette autorisation n'est acquise qu'à partir de l'instant où le fil CK est libéré (est à 1).

Lorsque le fil CK est libéré, le maître commence par appliquer la donnée sur le fil DT à l'étape M11, puis lie à 0 le fil CK à l'étape M12, pour indiquer à l'esclave que la donnée est disponible, et ensuite relâche le fil CK à l'étape M13. L'application de la donnée sur le fil DT avant la mise à 0 du fil CK garantit que la donnée sera disponible pour l'esclave dès l'instant où celui-ci détectera le front descendant sur le fil CK.

L'étape M16 "traitement de données" désigne toute opération susceptible d'être effectuée par le maître avant de retourner à l'étape M10 pour l'envoi d'une nouvelle donnée. Ainsi, le maître peut différer l'envoi d'une nouvelle donnée indépendamment de l'esclave, soit parce qu'il est en train de lire la donnée dans une mémoire interne ou est en train de préparer la donnée sur sa sortie, soit parce qu'il est occupé à d'autres tâches, soit parce que son horloge est très lente relativement à celle de l'esclave, ces diverses possibilités pouvant se cumuler en pratique. Ainsi, il apparaît ici que l'envoi d'une donnée est également subordonné à la disponibilité du maître.

Les étapes M14 et M15, représentées en traits pointillés sur l'organigramme de la figure 2A, sont optionnelles lors de la transmission d'une chaîne de bits. En effet, la donnée appliquée sur le fil DT à l'étape M11 peut être maintenue sur le fil DT jusqu'à l'étape M11 suivante, qui correspond à l'envoi du bit suivant. L'étape de vérification M14 devient alors redondante avec l'étape de vérification M10.

Les actions effectuées par l'esclave pour lire une donnée envoyée par le maître sont décrites par l'organigramme de la figure 2B, et comprennent les étapes suivantes :

| | |
|---|---|
| **Etape E10** | Détection d'un passage à 0 sur le fil CK |
| **Etape E11** | Lier à 0 le fil CK |
| **Etape E12** | lire le bit b |
| **Etape E13** | Traitement de données |
| **Etape E14** | Relâcher CK |

On voit tout d'abord que l'esclave ne lit la donnée à l'étape E12 qu'après avoir détecté un front descendant à l'étape E10. En effet, la détection d'une transition de la valeur logique par défaut, ici "1", à la valeur logique inverse, ici "0", signifie ici qu'une donnée a été appliquée sur le fil DT par le maître.

D'autre part, le fait de lier à 0 le fil CK à l'étape E11 avant de lire la donnée à l'étape E12 permet à l'esclave d'empêcher le maître d'appliquer une autre donnée sur le fil DT, tant que l'esclave n'aura pas finit de lire la donnée et n'aura pas signifié qu'il est prêt à recevoir une nouvelle donnée en relâchant le fil CK à l'étape E14.

Ainsi, entre l'étape de lecture E12 et l'étape E14 de relâchement du fil CK, l'esclave bénéficie d'une étape E13 de "traitement de données" qui n'est pas sous le contrôle du maître, et qu'il peut utiliser pour stocker la donnée reçue ou pour exécuter d'autres tâches, la durée de cette étape étant fonction de la fréquence d'horloge de l'esclave et des autres tâches qu'il est susceptible de devoir accomplir.

Comme on l'a déjà observé, l'envoi d'une nouvelle donnée est ainsi subordonné à la disponibilité de l'esclave. La relation de cause à effet existant entre l'étape E14 côté esclave et le passage de l'étape M10 à l'étape M11 coté maître, est repérée par une flèche sur les figures 2A et 2B. La relation de cause à effet entre l'étape M12 côté maître et le passage de l'étape E10 à l'étape E11 côté esclave est repérée par une autre flèche.

En pratique, l'action de lier à 0 le fil CK, effectuée par l'esclave à l'étape E11, et qui suit celle effectuée par le maître à l'étape M12, peut être exécutée de façon automatique et quasi-instantanée au moyen d'un circuit à déclenchement sensible à un front descendant sur le fil CK. Dans ce cas, l'étape E10 est une étape implicite dans le fonctionnement d'un tel circuit à déclenchement, dont un exemple sera décrit plus loin.

En définitive, on voit que chacun des dispositifs est partiellement maître du fil CK, malgré les qualifications de "maître" et "esclave" utilisées pour distinguer les deux dispositifs. En conséquence, chacun des dispositifs peut imposer sa vitesse de fonctionnement à l'autre, en cas de disparité des fréquences d'horloge ou lorsqu'un des dispositifs fonctionne en multitâche sur des applications qui sont prioritaires sur la transmission de données elle-même.

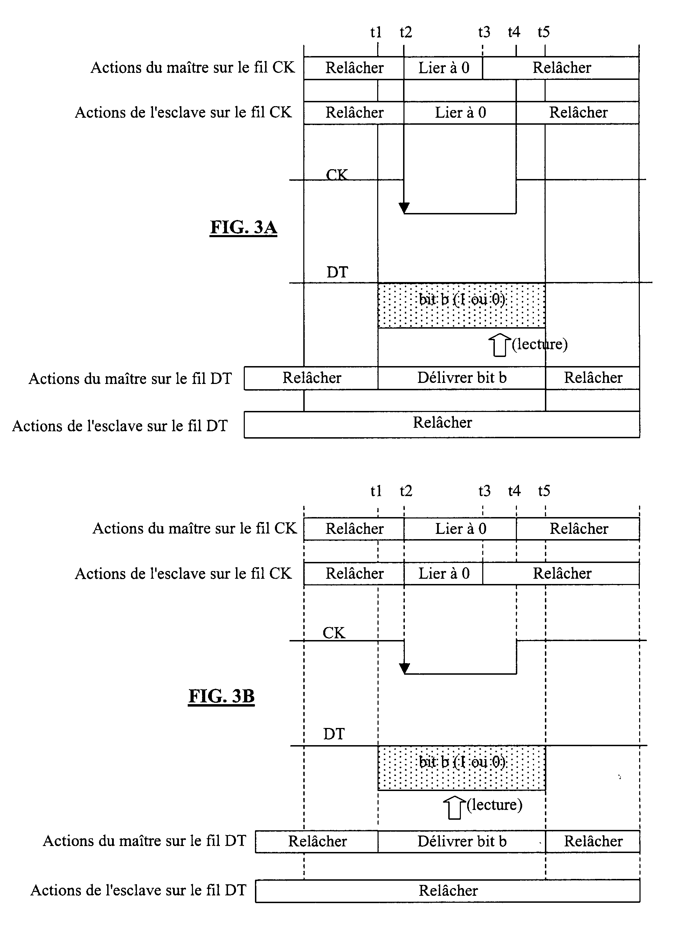

Les figures 3A et 3B donnent une vision d'ensemble du procédé de l'invention lors d'une transmission de données dans le sens maître vers esclave.

Sur ces deux figures, on voit que le maître applique la donnée (le bit b) sur le fil DT à un instant t1, et lie à 0 le fil CK à un instant t2. De son côté, l'esclave lie à 0 le fil CK sensiblement au même instant t2. On suppose ici que cette action est faite de façon automatique par un circuit à verrouillage, comme évoqué précédemment.

La figure 3A illustre le cas où le maître est plus rapide que l'esclave. On voit que le maître relâche le fil CK à un instant t3 tandis que l'esclave ne relâche le fil CK qu'à un instant t4 postérieur à t3. Dans ce cas, c'est donc l'esclave qui impose son rythme à la transmission de données. La lecture du bit est effectuée par l'esclave à un instant quelconque entre t2 et t4.

La figure 3B illustre le cas où l'esclave est plus rapide que le maître. Ici, l'esclave relâche le fil CK à un instant t3 tandis que le maître ne relâche le fil CK qu'à un instant t4 postérieur à t3. Dans ce cas, c'est donc le maître qui impose son rythme à la transmission de données. La lecture du bit est effectuée par l'esclave à un instant quelconque entre t2 et t3.

Comme cela a été mentionné plus haut, le relâchement du fil de donnée DT par le maître, à un instant t5, est optionnel si une nouvelle donnée doit être envoyée.

### Transmission de données dans le sens esclave-maître

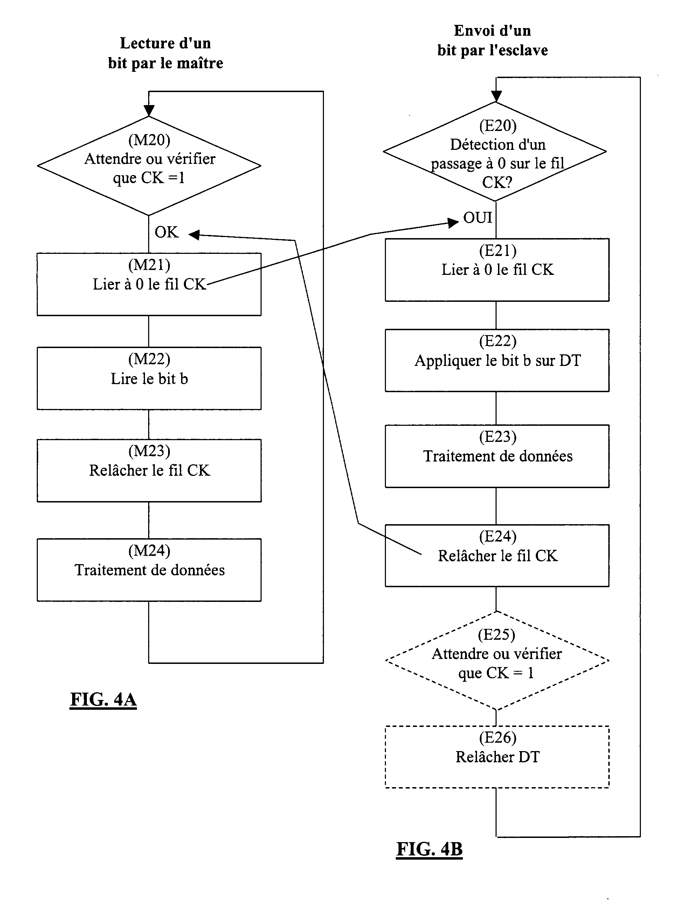

Les actions effectuées par l'esclave pour l'envoi d'un bit de donnée au maître sont décrites par l'organigramme de la figure 4B, et comprennent les étapes suivantes :

| | |
|---|---|
| **Etape E20** | Détection d'un passage à 0 sur le fil CK |
| **Etape E21** | Lier à 0 le fil CK |
| **Etape E22** | appliquer le bit b sur DT |
| **Etape E23** | Traitement de données |
| **Etape E24** | Relâcher CK |
| **Etape E25** | Attendre ou vérifier que CK = 1 |
| **Etape E26** | Relâcher DT |

Ici, l'esclave n'applique un bit sur le fil DT qu'après avoir détecté un passage à 0 sur le fil CK à l'étape E20. En effet, c'est le maître qui initie une transmission de données, que le bit soit envoyé par le maître ou par l'esclave.

L'application du bit sur le fil DT à l'étape E22 est précédée de l'étape E21 où l'esclave lie à 0 le fil CK. Il sera vu plus loin que les étapes E21 et E22 peuvent en pratique être simultanées ou quasi-simultanées, car :
- la donnée peut être préparée dans un tampon de sortie prévu du côté de l'esclave,
- un premier circuit à déclenchement peut être prévu côté esclave pour lier automatiquement à 0 le fil CK lorsqu'un front descendant apparaît sur le fil CK,
- un deuxième circuit à déclenchement peut être prévu côté esclave pour agir automatiquement sur le tampon de sortie de manière que celui-ci délivre la donnée sur le fil DT lorsque le niveau 0 apparaît sur le fil CK.

Dans ces conditions, l'étape de détection E20 est implicite dans le fonctionnement du premier circuit à déclenchement.

De plus, comme les étapes E20-E21 sont identiques aux étapes E10-E11 décrites plus haut (fig. 2B), elles peuvent être exécutées de façon automatique par le même circuit à déclenchement, comme cela sera vu plus loin.

L'étape de "traitement de données" E23 qui précède l'étape E24 de relâchement du fil CK, désigne comme précédemment toute opération susceptible d'être effectuée par l'esclave, dont la durée n'est pas sous le contrôle du maître. Ainsi, l'esclave empêche le maître d'initier une nouvelle transmission d'un bit (étape M21 décrite plus loin) tant qu'il n'a pas relâché le fil CK.

Les étapes E25 et E26, représentées en traits pointillés sur la figure 4B, sont optionnelles lors de la transmission d'une chaîne de bits. En effet, la donnée appliquée sur le fil DT à l'étape E22 peut être maintenue sur le fil DT jusqu'à l'étape E22 suivante, lors de l'envoi du bit suivant de la chaîne de bits. Dans ce cas, l'étape de vérification E25 se trouve être redondante avec l'étape de détection E20, car le fait de détecter un front descendant sur le fil CK sous-entend que le fil CK a été préalablement relâché par le maître.

Les actions effectuées par le maître pour la réception d'une donnée sont décrites par l'organigramme de la figure 4A, et comprennent les étapes suivantes :

| | |
|---|---|
| **Etape M20** | Attendre ou vérifier que CK = 1 |
| **Etape M21** | Lier à 0 le fil CK |
| **Etape M22** | Lire le bit b |
| **Etape M23** | Relâcher CK |
| **Etape M24** | Traitement de données |

Le maître initie la communication à l'étape M20 en liant à 0 le fil CK. Cette mise à 0 correspond ici à une demande d'envoi d'un bit. Avant de lier à 0 le fil CK, le maître vérifie à l'étape M20 que le fil CK a été libéré par l'esclave, ce qui signifie que l'esclave est prêt.

Après avoir forcé le fil CK à 0, le maître lit le bit à l'étape M22 puis relâche le fil CK à l'étape M23. Le maître dispose ensuite lui-même d'une étape de "traitement de données" M24, par exemple pour stocker le bit reçu dans sa mémoire, dont la durée n'est pas sous le contrôle de l'esclave car ce dernier ne pourra envoyer de nouvelle donnée tant que le maître n'aura pas à nouveau forcé à 0 le fil CK à l'étape M21.

Sur les figures 4A et 4B, une flèche montre la relation de cause à effet entre l'étape M21 côté maître et le passage de l'étape E20 à l'étape E21 côté esclave. Une autre flèche montre la relation de cause à effet entre l'étape E24 côté esclave et le passage de l'étape M20 à l'étape M21 côté maître.

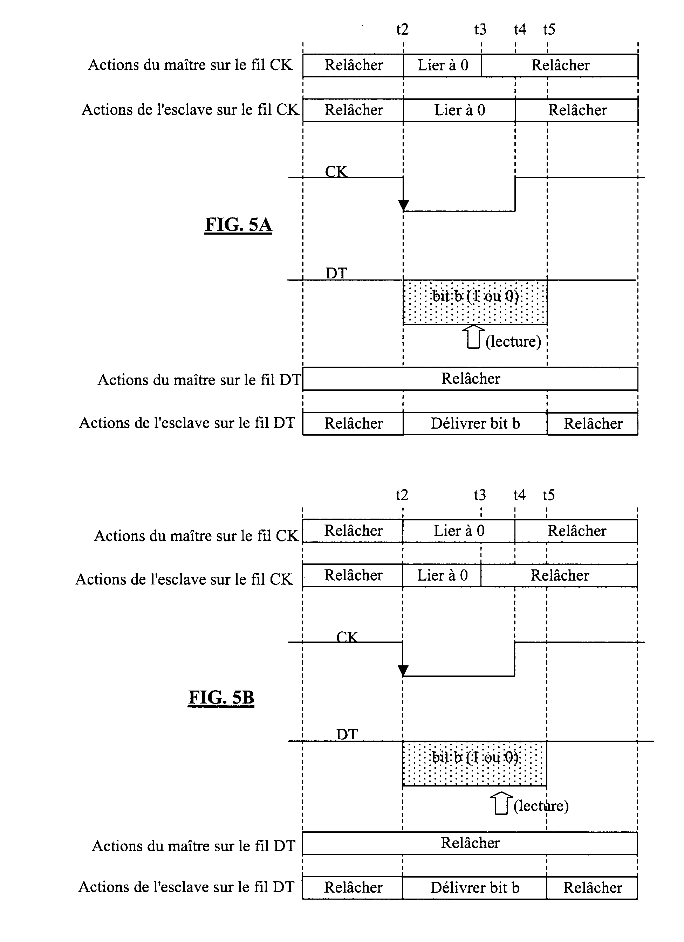

Les figures 5A et 5B donnent une vision d'ensemble du procédé de l'invention lors d'une transmission de données dans le sens esclave vers maître.

Sur ces deux figures, on voit que l'esclave lie à 0 le fil CK et applique la donnée (le bit b) sur le fil DT à l'instant t2 où le maître lie à 0 le fil CK, ces deux opérations étant ici simultanées ou quasi-simultanées grâce à l'emploi d'un tampon de sortie et de circuits à déclenchement décrits plus loin.

La figure 5A illustre le cas où le maître est plus rapide que l'esclave et relâche le fil CK à un instant t3, tandis que l'esclave ne relâche le fil CK qu'à un instant t4 postérieur à t3. Ainsi, la lecture du bit est effectuée par le maître à un instant quelconque entre les instants t2 et t3.

La figure 5B illustre le cas où l'esclave est plus rapide que le maître et relâche le fil CK à un instant t3, tandis que le maître ne relâche le fil CK qu'à un instant t4 ultérieur à t3. Ainsi, la lecture du bit est effectuée par le maître à un instant quelconque entre les instants t2 et t4.

Comme précédemment, le relâchement à un instant t5 du fil de donnée DT est optionnel si une nouvelle donnée doit être envoyée par l'esclave.

Toutefois, en pratique, pour éviter un conflit sur le fil de données lors d'un changement du sens de transmission des données, le relâchement du fil de données DT doit être de préférence implicite et automatique, et l'instant t5 doit arriver immédiatement après l'instant t4.

### Réalisation d'un circuit d'interface de communication pour le dispositif esclave

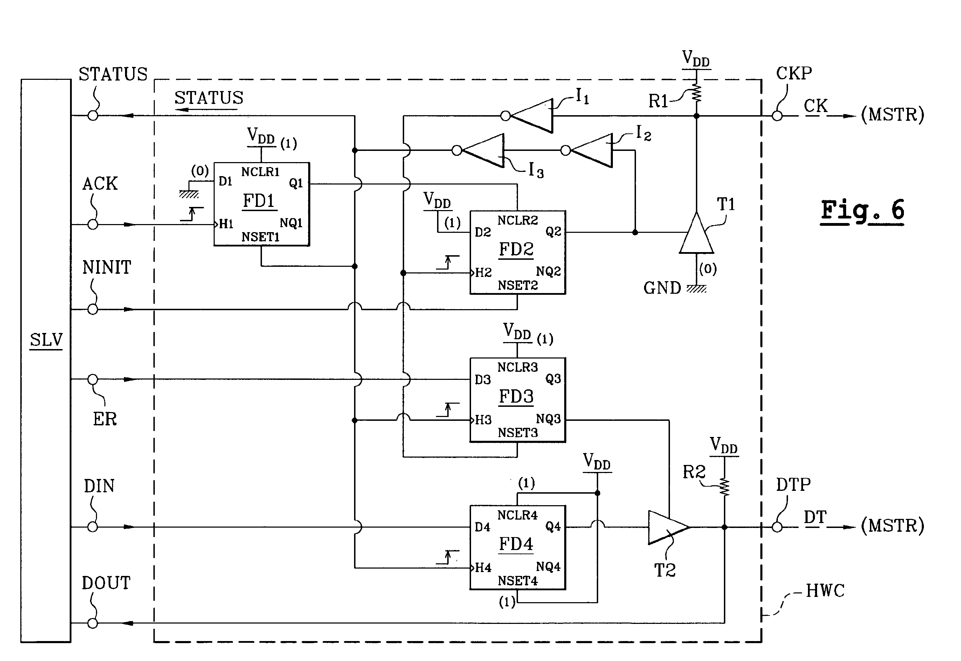

La figure 6 représente, à titre non limitatif, un exemple de réalisation d'un circuit d'interface de communication HWC destiné à être associé au dispositif esclave SLV pour exécuter automatiquement certaines étapes du procédé de l'invention, à savoir :
1) le fait de lier à 0 le fil d'horloge CK en réaction à un front descendant sur le fil d'horloge, et
2) le fait d'appliquer un bit de donnée sur le fil DT en réaction à un niveau 0 sur le fil d'horloge.

En pratique, un tel circuit HWC peut être intégré dans le dispositif esclave ou être réalisé dans un boîtier externe connecté au dispositif esclave, comme on le verra plus loin.

Le circuit HWC comprend ici quatre bascules D de type flip-flop, respectivement FD1 à FD4, deux tampons trois états T1, T2 ("buffers tristate") et trois portes inverseuses I1, I2, I3 du type Trigger de Schmitt (c'est-à-dire à hystérésis de commutation), les portes inverseuses I2 et I3 étant agencées en série. Le circuit HWC comprend également des entrées/sorties connectées au dispositif esclave parmi lesquelles on distingue une entrée ACK ("Acknowledge") qui est active sur front montant, une entrée NINIT ("Initialisation") qui est active sur niveau bas, une entrée ER de sélection du mode de fonctionnement (Emission ou Réception), une entrée de données DIN (Data Input), une sortie de données DOUT (Data Out) et une sortie STATUS délivrant un signal de contrôle du même nom. Le circuit HWC comprend également une borne CKP connectée au fil CK, une borne DTP connectée au fil DT, une résistance de rappel au niveau haut R1 connectée à la borne CKP, et une résistance de rappel au niveau haut R2 connectée à la borne DTP.

Chacune des bascules FD1 à FD4 comprend :
- une entrée D, respectivement D1 à D4,
- une sortie Q, respectivement Q1 à Q4
- une sortie inversée NQ, respectivement NQ1 à NQ4,
- une entrée NSET de mise à 1 de la sortie Q, active sur niveau bas, respectivement NSET1 à NSET4,
- une entrée NCLR de mise 0 de la sortie Q, active sur niveau bas, respectivement NCLR1 à NCLR4, et
- une entrée de déclenchement H, respectivement H1 à H4, active sur front montant, pour délivrer sur la sortie Q une donnée présente sur l'entrée D.

Les connexions entre les divers éléments du circuit HWC et les polarisations à 1 ou à 0 de certaines entrées des bascules FD1 à FD4 sont décrites par le tableau 1 figurant en Annexe, qui fait partie intégrante de la présente description. Avant tout échange de données, la sortie Q1 est mise à 1 par l'esclave. La sortie NQ3 est mise à 0 lorsque CK = 1, et restera à 0 lorsque CK passera à 1.

### Fonctionnement du circuit HWC :

Le circuit HWC est placé en mode réception de données en portant à 1 le signal ER. L'entrée D3 est alors à 1 et la sortie NQ3 est à 0. Le tampon T2, commandé par la sortie NQ3, est dans l'état haute impédance et la sortie Q4 est isolée de la borne DTP.

Lorsque le dispositif maître (non représenté), qui est connecté à l'autre extrémité de la ligne CK/DT, met le fil CK à 0 pour indiquer qu'une donnée est disponible sur le fil DT, la sortie de la porte I1 passe à 1. L'entrée H2 reçoit un front montant et déclenche la bascule FD2 dont la sortie Q2 passe à 1, car l'entrée D2 est en permanence à 1. Le passage à 1 de la sortie Q2 active le tampon T1, qui devient transparent et lie à 0 (masse) le fil CK. Ainsi, en réponse à un front descendant sur le fil CK, le circuit HWC lie automatiquement à 0 le fil CK.

Simultanément, l'entrée de la porte 12 passe à 1 et le signal STATUS passe à 1 à la sortie de la porte I3, ce qui permet au dispositif esclave de savoir que le maître a lié à 0 le fil CK. Le dispositif esclave lit alors la donnée présente sur la borne DOUT, qui est connectée au fil DT. Lorsque la donnée est lue, et après l'étape "traitement de données" qui permet par exemple au dispositif esclave de stocker la donnée reçue dans une mémoire interne, le dispositif esclave applique une impulsion positive sur l'entrée ACK, soit sur l'entrée H1 de la bascule FD1. La sortie Q1 bascule à 0 car d'une part l'entrée D1 de la bascule FD1 est en permanence à 0 et d'autre part Q2 = NSET1 = 1. Le passage à 0 de la sortie Q1 se retrouve sur l'entrée NCLR2 et fait passer à 0 la sortie Q2 de la bascule FD2. Le tampon T1 repasse alors dans l'état haute impédance, et le fil CK n'est plus lié à la masse par le circuit HWC. De l'autre côté de la ligne, le relâchement du fil CK permet au dispositif maître de savoir qu'il peut envoyer une nouvelle donnée (si le dispositif maître a déjà relâché le fil CK).

Le circuit HWC est placé en mode émission de données en portant à 0 le signal ER. Dans ce cas, l'entrée D3 de la bascule FD3 est à 0. Le dispositif esclave applique une donnée à envoyer sur l'entrée D4 de la bascule FD4 par l'intermédiaire de l'entrée DIN du circuit HWC.

Lorsque le dispositif maître, à l'autre extrémité de la ligne, lie à 0 le fil CK, la sortie de la porte I1 passe à 1 et le tampon T1 devient transparent comme cela a été décrit plus haut, de sorte que le fil CK se trouve également lié à 0 par le circuit HWC. Simultanément, le signal STATUS passe à 0, après un certain retard imposé par les deux portes I2, I3, qui ont été prévues pour des raisons de synchronisation lors du passage du mode émission au mode réception, ou vice-versa. Le front montant du signal STATUS se retrouve sur les entrées H3, H4 et déclenche les bascules FD3, FD4. Ainsi, la sortie NQ3 passe à 1 (D3 recevant le signal ER qui est égal à 0) et le tampon T2 devient transparent. Simultanément, la sortie Q4 délivre la donnée présente sur l'entrée D4, et la donnée se trouve donc appliquée sur le fil DT. Après l'étape de "traitement de données" qui permet au dispositif esclave d'appliquer une nouvelle donnée sur la borne DIN, le dispositif esclave applique une impulsion positive sur la borne ACK, ce qui remet dans l'état haute impédance le tampon T1. Le signal STATUS repasse à 0. A cet instant, le fil CK repasse à 1 si le dispositif maître a déjà lu la donnée et a déjà relâché le signal CK à l'autre extrémité de la ligne. Sinon, le fil CK repasse à 1 ultérieurement, lorsque le dispositif maître a terminé l'opération de lecture et/ou a effectué d'autre tâches.

Lorsque le fil CK repasse à 1, la sortie de la porte I1 passe à 0, ce qui active l'entrée NSET3 de la bascule FD3 et fait passer à 1 la sortie Q3 et à 0 la sortie NQ3. Ainsi, le tampon de sortie T2 repasse dans l'état haute impédance et la donnée n'est plus appliquée sur le fil DT. Lorsque le dispositif maître forcera à nouveau à 0 le fil CK, la nouvelle donnée appliquée sur l'entrée DI sera délivrée sur le fil DT de la manière qui vient d'être d'écrite.

La borne NINIT, qui pilote l'entrée NSET2 de la bascule FD2, permet de forcer à 1 la sortie Q2 pour lier à 0 le fil CK indépendamment de la transmission d'un bit. Cette possibilité peut être utilisée pour mettre en oeuvre un protocole de plus haut niveau permettant au dispositif esclave d'indiquer au dispositif maître qu'il est prêt à envoyer des données ou qu'il est prêt à en recevoir.

Les deux portes inverseuses I2 et I3 en série présentent un retard de commutation déterminé qui assure qu'un front montant sur H3 arrivera après que l'entrée NSET3 soit passée à 1.

### Exemple d'application du procédé selon l'invention

La figure 7 illustre une application du procédé de l'invention à la transmission de données entre un micro-ordinateur PC et un microprocesseur MP, par exemple pour effectuer des opérations de contrôle, de test ou de maintenance sur le microprocesseur MP au moyen du micro-ordinateur PC. Le circuit d'interface HWC est agencé dans un boîtier de faibles dimensions qui est enfiché directement sur le connecteur 10 du port parallèle du micro-ordinateur. Les fils d'horloge CK et de données DT sont connectés d'une part au circuit HWC et d'autre part à des ports d'entrée/sortie du microprocesseur MP. Les étapes décrites par les organigrammes des figures 2A, 2B, 4A, 4B, hormis celles qui sont exécutées automatiquement par le circuit HWC, sont exécutées par des programmes prévus dans chacun des dispositifs PC, MP, de tels programmes étant à la portée de l'homme de l'art.

En pratique, la mise en oeuvre du procédé selon l'invention nécessite la prévision d'un protocole de plus haut niveau qui permet d'initialiser une communication en déterminant quel dispositif doit envoyer le premier des données. Une fois la communication engagée, ce protocole repose sur des commandes transmises par l'intermédiaire du fil de données, qui permettent aux deux dispositifs de savoir qui doit envoyer la prochaine chaîne de bits. Par exemple, le dispositif qui émet les données peut indiquer à l'autre qu'il va envoyer un nombre déterminé de chaînes de bits (par exemple des octets) et qu'il va ensuite se placer en mode réception, etc.. De nombreuses variantes peuvent être imaginées en ce qui concerne ce protocole de plus haut niveau, en appliquant les règles de l'art.

L'initialisation proprement dite d'une communication peut être faite de la façon suivante, lorsque des opérations de test sur le microprocesseur sont prévues. Le micro-ordinateur met le microprocesseur à 0 en appliquant un signal RST sur une entrée du microprocesseur prévue à cet effet, puis envoi un nombre N déterminé d'impulsions électriques au microprocesseur par l'intermédiaire du fil DT. Le microprocesseur dispose d'un compteur interne qui est activé après une remise à 0 et qui compte le nombre N d'impulsions reçues. Si ce nombre correspond à un nombre N1 prédéterminé, le microprocesseur bascule en mode test et va lire un programme de test enregistré dans sa mémoire à une adresse particulière. Ce programme de test lui indique par exemple qu'il doit se placer en mode réception pour recevoir des instructions à traiter. Le microprocesseur lie à 0 le fil CK pour recevoir la première donnée, et ainsi de suite pour recevoir une instruction complète.

L'initialisation d'une communication peut bien entendu être obtenue de diverses autres manières. Par exemple, il peut être convenu que le premier dispositif qui mettra à 0 le fil d'horloge à un instant quelconque aura la possibilité d'envoyer des données à l'autre, qui se placera alors en mode réception.

Le procédé de l'invention est bien entendu susceptible de diverses autres applications et modes de réalisation. Notamment, bien que la présente invention ait été initialement conçue pour la prévision d'une liaison série entre deux dispositifs, la présente invention est également applicable à une communication parallèle, qui peut être obtenue de façon simple en prévoyant une pluralité de fils de données DT, en nombre correspondant au nombre de bits à transférer en parallèle. D'autre part, bien que le procédé de l'invention ait été décrit dans ce qui précède en choisissant une valeur logique par défaut égale à 1, il est bien évident que cette valeur pourrait être 0 au moyen d'une résistance de rappel connectée à la masse, les dispositifs liant alors le fil d'horloge à 1 (tension VDD) lors du processus d'échange de données. Enfin, un mode d'exécution de l'invention consiste à réaliser deux circuits d'interface de communication, l'un esclave, l'autre maître, comprenant des moyens logiciels et matériels pour exécuter l'ensemble des étapes du procédé de l'invention. De tels dispositifs, ou co-processeurs de communication, peuvent être incorporés dans tous types d'appareils ou connectés à tous types d'appareils pour obtenir un système de transmission de données synchrone permettant aux appareils de dialoguer et d'échanger des données séries au moyen de deux fils seulement, ou des données parallèles au moyen de plusieurs fils de données.

### ANNEXE (faisant partie intégrante du corps de la description)

**Tableau**

| **Elément** | **Connecté à :** |
|---|---|
| entrée de la porte inverseuse I1 | borne CKP, fil CK |
| sortie de la porte inverseuse I1 | H2, NSET3 |
| entrée de la porte inverseuse I2 | Q2 |
| sortie de la porte inverseuse I2 | entrée de I3 |
| sortie de la porte inverseuse I3 | borne STATUS, H3, H4, NSBT1 |
| entrée du tampon T1 | niveau logique "0" (masse) |
| sortie du tampon T1 | borne CKP, fil CK, entrée de I1 |
| entrée de commande du tampon T1 | Q2 |
| entrée du tampon T2 | Q4 |
| sortie du tampon T2 | borne DTP, fil DT |
| entrée de commande du tampon T2 | NQ3 |
| entrée ACK | H1 |
| entrée NINIT | NSET2 |
| entrée ER | D3 |
| entrée DIN | D4 |
| sortie DOUT | borne DTP, fil DT |
| **Entrées de bascules D maintenues à 1 (tension VDD)** | NCLR1, D2, NCLR3, NCLR4, NSET4 |
| **Entrées de bascules D maintenues à 0 (masse)** | D1 |

## Revendications

1. Procédé de transmission de données entre deux dispositifs (D1, MP, D2, PC), au moyen d'un fil d'horloge (CK) et d'au moins un fil de données (DT), le fil d'horloge étant maintenu par défaut à une valeur logique A, **caractérisé en ce que** :
- chaque dispositif peut lier le fil d'horloge à un potentiel électrique représentant une valeur logique B inverse de A,
- lors de la transmission d'une donnée, les deux dispositifs lient à B le fil d'horloge (M12, E11, M21, E21),
- le dispositif à qui la donnée est destinée ne relâche pas le fil d'horloge (CK) tant qu'il n'a pas lu la donnée (M23, E14),
- le dispositif qui envoie la donnée maintient la donnée sur le fil de données (DT) au moins jusqu'à un instant (t3, t4) où le fil d'horloge (CK) est relâché par le dispositif à qui la donnée est destinée.

2. Procédé selon la revendication 1, dans lequel l'un des dispositifs est maître et l'autre esclave, le maître se distinguant de l'esclave par le fait qu'il est le premier à lier à B le fil d'horloge (M12, M21) lorsqu'une donnée est transmise, quel que soit le sens de transmission de la donnée.

3. Procédé selon la revendication 2 dans lequel, lorsque le maître doit envoyer une donnée à l'esclave, le maître applique la donnée sur le fil de données (M11) puis lie à B le fil d'horloge (M12).

4. Procédé selon la revendication 3 dans lequel, lorsque l'esclave doit recevoir une donnée du maître, l'esclave détecte la valeur B sur le fil d'horloge (E10), puis lie à B le fil d'horloge (E11) et lit la donnée (E12).

5. Procédé selon la revendication 4 dans lequel le temps (E13) dont dispose l'esclave pour relâcher le fil d'horloge après avoir reçu une donnée, est indépendant d'une quelconque action du maître, le maître n'envoyant pas de nouvelle donnée tant que l'esclave n'a pas relâché le fil d'horloge (M10, M11).

6. Procédé selon la revendication 2 dans lequel, lorsque le maître doit recevoir une donnée de l'esclave, le maître lie à B le fil d'horloge (M21).

7. Procédé selon la revendication 6 dans lequel, lorsque l'esclave doit envoyer une donnée au maître, l'esclave détecte la valeur B sur le fil d'horloge (E20), puis lie à B le fil d'horloge (E21) et applique la donnée sur le fil de données (E22).

8. Procédé selon la revendication 7 dans lequel le temps (E23) dont dispose l'esclave pour relâcher le fil d'horloge après avoir envoyé une donnée, est indépendant d'une quelconque action du maître, le maître ne liant pas à B le fil d'horloge pour demander l'envoi d'une nouvelle donnée tant que l'esclave n'a pas relâché le fil d'horloge (M10).

9. Procédé selon l'une des revendications 2 à 8, dans lequel, quand le fil d'horloge présente la valeur logique A, le temps dont dispose le maître pour lier à B le fil d'horloge est indépendant (M16, M24) d'une quelconque action de l'esclave.

10. Procédé selon l'une des revendications 2 à 9, **caractérisé en ce qu'**il comprend une étape consistant à équiper l'esclave d'un circuit d'interface de communication (HWC) comprenant :
- des moyens à déclenchement pour lier automatiquement à B le fil d'horloge lorsque le fil d'horloge passe de A à B,
- une entrée pour appliquer aux moyens à déclenchement un signal de relâchement du fil d'horloge, et
- une sortie pour délivrer un signal d'information (STATUS) présentant une première valeur lorsque le fil d'horloge est lié à B par les moyens à déclenchement et une deuxième valeur lorsque le fil d'horloge est relâché par les moyens à déclenchement.

11. Procédé selon la revendication 10, comprenant une étape consistant à prévoir en outre, dans le circuit d'interface de communication :
- des moyens de stockage d'au moins une donnée, et
- des moyens pour appliquer automatiquement la donnée sur le fil de données lorsque le fil d'horloge passe de A à B.

12. Procédé selon l'une des revendications 1 à 11, dans lequel A=1 et B=0.

13. Dispositif d'émission/réception de données (MSTR) de type maître comprenant une borne de connexion à un fil d'horloge (CK), au moins une borne de connexion à un fil de données (DT), et des moyens pour lier le fil d'horloge (CK) à un potentiel électrique B représentant une valeur logique inverse d'une valeur logique A, **caractérisé en ce qu'**il comprend des moyens pour exécuter les opérations suivantes, lorsqu'une donnée doit être émise:
- vérifier ou attendre que le fil d'horloge présente la valeur logique A (M10),
- appliquer la donnée sur le fil de données (M11),
- lier à B le fil d'horloge (M12), puis
- relâcher le fil d'horloge (M13), et
- maintenir la donnée sur le fil de données au moins jusqu'à un instant (t3, t4) où le fil d'horloge présente la valeur logique A (M14, M10)

14. Dispositif selon la revendication 13, comprenant en outre des moyens pour exécuter les opérations suivantes, lorsqu'une donnée doit être reçue :
- vérifier ou attendre que le fil d'horloge présente la valeur logique A (M20),
- lier à B le fil d'horloge (M21),
- lire la donnée sur le fil de données (M22), puis
- relâcher le fil d'horloge (M23).

15. Dispositif d'émission/réception de données (SLV, SLV+HWC) de type esclave destiné à communiquer avec un dispositif de type maître (MSTR) selon l'une des revendications 13 et 14, comprenant une borne (CKP) de connexion à un fil d'horloge (CK), au moins une borne (CDT) de connexion à un fil de données (DT), et des moyens pour lier le fil d'horloge à un potentiel électrique B représentant une valeur logique inverse d'une valeur logique A, **caractérisé en ce qu'**il comprend des moyens pour exécuter les opérations suivantes, lorsqu'une donnée doit être reçue :
- détecter un passage de A à B sur le fil d'horloge (E10),
- lier à B le fil d'horloge (E11),
- lire la donnée sur le fil de données (E12), et
- relâcher le fil d'horloge (E14).

16. Dispositif selon la revendication 15, comprenant en outre des moyens pour exécuter les opérations suivantes, lorsqu'une donnée doit être émise :
- détecter un passage de A à B sur le fil d'horloge (E20),
- lier à B le fil d'horloge (E21),
- appliquer la donnée sur le fil de données (E22), et
- relâcher le fil d'horloge (E24).

17. Système de transmission de données synchrone, **caractérisé en ce qu'**il comprend un dispositif de type maître (MSTR) selon l'une des revendications 13 et 14 relié par un fil d'horloge (CK) et au moins un fil de données (DT) à un dispositif de type esclave (SLV) selon l'une des revendications 15 et 16.

18. Circuit d'interface de communication (HWC) de type esclave relié ou destiné à être relié par l'intermédiaire d'un fil d'horloge (CK) et d'au moins un fil de données (DT) à un dispositif de type maître (MSTR) selon l'une des revendications 13 et 14, **caractérisé en ce qu'**il comprend :
- des moyens pour lier le fil d'horloge à un potentiel électrique B représentant une valeur logique inverse d'une valeur logique A,
- des moyens à déclenchement (FD1, FD2) pour lier automatiquement à B le fil d'horloge lorsque le fil d'horloge passe de A à B,
- une entrée (ACK) pour appliquer aux moyens à déclenchement un signal de relâchement du fil d'horloge, et
- une sortie pour délivrer un signal d'information (STATUS) présentant une première valeur lorsque le fil d'horloge est lié à B par les moyens à déclenchement et une deuxième valeur lorsque le fil d'horloge est relâché par les moyens à déclenchement.

19. Circuit d'interface de communication selon la revendication 18, comprenant en outre :
- des moyens (FD4) de stockage d'au moins une donnée, et
- des moyens (FD3, FD4) pour appliquer automatiquement la donnée sur le fil de données lorsque le fil d'horloge passe de A à B.
